**Europäisches Patentamt**

**European Patent Office**

**Office européen des brevets**

(19)

(11) Publication number : **0 364 231 B1**

# (12) EUROPEAN PATENT SPECIFICATION

(45) Date of publication of patent specification :
**30.12.92 Bulletin 92/53**

(51) Int. Cl.⁵ : **G01P 15/02**

(21) Application number : **89310381.2**

(22) Date of filing : **11.10.89**

(54) **Pendulous assembly.**

(30) Priority : **11.10.88 US 255619**

(43) Date of publication of application :
**18.04.90 Bulletin 90/16**

(45) Publication of the grant of the patent :
**30.12.92 Bulletin 92/53**

(84) Designated Contracting States :
**AT BE CH DE ES FR GB GR IT LI LU NL SE**

(56) References cited :
**EP-A- 0 157 663**
**US-A- 3 605 503**

(73) Proprietor : **Hanson, Richard A.**
**21220 North East 156th Avenue**
**Woodinville Washington 98072 (US)**

(72) Inventor : **Hanson, Richard A.**
**21220 North East 156th Avenue**
**Woodinville Washington 98072 (US)**

(74) Representative : **Alexander, Thomas Bruce et al**
**Boult, Wade & Tennant 27 Furnival Street**
**London EC4A 1PQ (GB)**

## Description

The present invention relates generally to a pendulous assembly for use in an accelerometer or other such force sensing device, and more particularly to specifically configured mounting pads which serve to connect the pendulous assembly to a main support forming part of the device. The present invention relates more particularly to a force sensing device of the type disclosed in published European Patent Application EP-A-0268351, filed August 25, 1986 and in the Applicant's continuation-in-part U.S. application Serial No. 221,116, filed July 19, 1988, and entitled A PENDULOUS ASSEMBLY FOR USE IN AN ACCELEROMETER OR SIMILAR DEVICE which was unpublished on the priority date of this application.

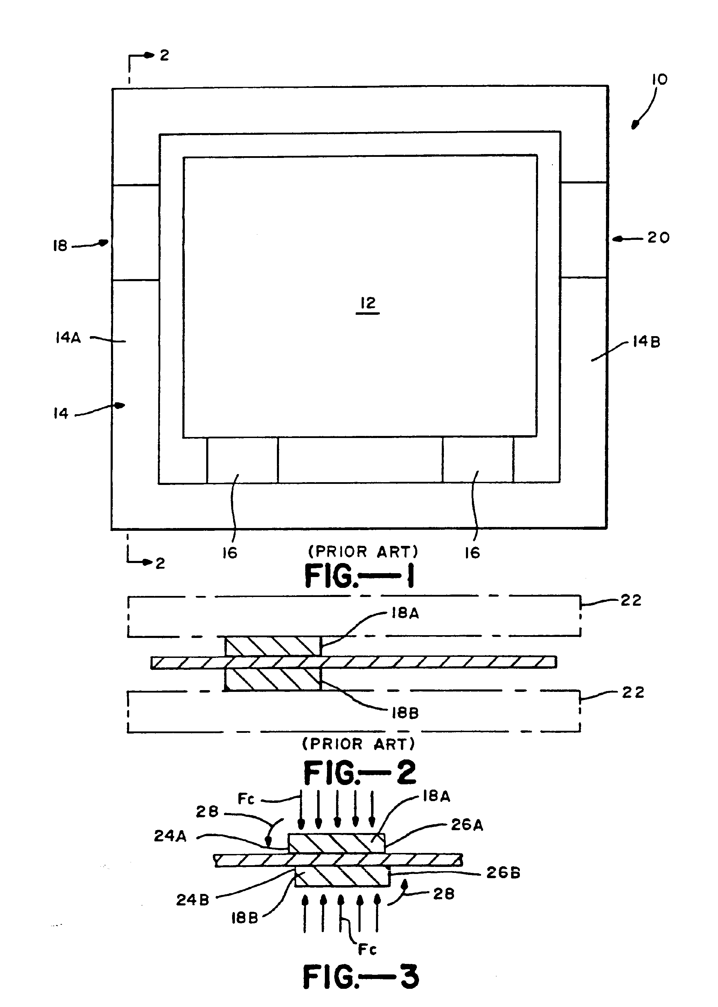

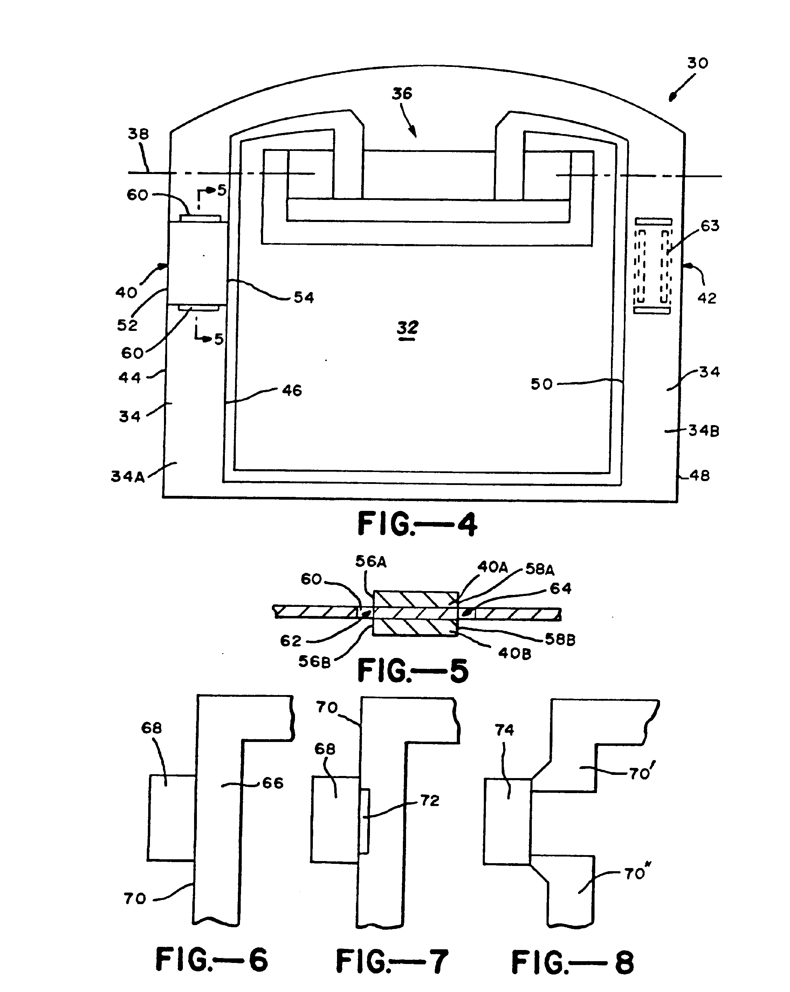

In the above recited patent applications, there is disclosed a prior art pendulous or proofmass assembly for use in an accelerometer or other such force sensing device. That prior art assembly has been reproduced in Figure 1 of the present application and is generally designated by the reference numeral 10. The pendulous assembly 10 is shown including a flat, generally rectangular proofmass 12 and a support arrangement including a flat frame 14 and flexures 16 supporting the proofmass for back and forth pivotal movement about a given axis through a horizontal resting plane which contains the proofmass, frame and flexures when the proofmass is at rest. The overall assembly may include other components such as pickoff plates and torque coils, as described in European patent application EP-A-0268351. In addition, the assembly includes one pair of top and bottom mounting pads 18 on one section 14A of frame 14, on one side of the proofmass, and a second pair of top and bottom mounting pads on an opposite section 14B of the frame, on opposite side of the proofmass. As best illustrated in Figure 2, the top one of the mounting pads 18 (designated at 18A) is disposed on the top side of frame section 14A while the bottom mounting pad 18 (designated 18B) is mounted on the underside of frame section 18A and is intended to be in vertical alignment with mounting pad 18A. The mounting pads 20 are positioned in a similar way on frame section 14B.

Still referring to Figure 2 in conjunction with Figure 1, the purpose for the mounting pads is to mount the entire pendulous assembly to a main support by means of opposing clamps indicated by means of dotted line at 22. Note that the clamps engage the outwardly facing surfaces of the mounting pads 18A and B on opposite sides of frame section 14A and, while not shown, they engage the outer surfaces of mounting pads 20 on opposite sides of frame section 14B. This is well known in the art and, hence, will not be described in further detail. Suffice it to say that the entire pendulous assembly is supported by clamps 22 so that the proofmass is free to pivot or deflect back and forth relative to frame 14, the clamps and the outside world (e.g., the main support to which the frame is connected by means of the clamps).

As discussed in detail in Applicant's previous applications recited above, it is extremely critical to the operation of the overall force sensing device that the proofmass, flexures and frame be as free as possible of random and uncontrollable stresses and strains. One particular situation which induces undesired and uncontrolled strains into frame 14 is when the top and bottom mounting pads are not truly aligned along their edges, as exemplified diagrammatically in Figure 3. As seen there, the front edge 24A of mounting pad 18A, that is, the edge furthest away from flexure 16, is not in direct vertical alignment with the front edge 24B of mounting pad 18B. This is also true for the back edges 26A and 26B. As a result, when clamping forces Fc are applied to the mounting pads as a result of clamps 22, the misalignment between two pads tends to produce a torque or twisting in the frame adjacent the pads, as diagrammatically illustrated by arrows 28. Such torque or twisting forces, in turn, produce undesired strains in the frame. These forces are especially troublesome to the back edges of the mounting pads since they are closest to the flexures, whereas the front edges of the pads have little effect and, hence, the back edges primarily determine any adverse affects on the way in which the proofmass pivots back and forth during operation of the overall force sensing device. In any event, as will be described hereinafter, it is desirable to keep such stresses on either ends of the mounting pads or, for that matter, on their sides, to a minimum. This can be accomplished by ensuring that each pair of top and bottom mounting pads are indeed in vertical alignment with one another. In the case of proofmass assembly 10, it is considerably easier to ensure that the side edges of each pair of mounting pads are in alignment if they are the full width of the frame and if they are co-extensive with the side edges of their respective frame section. However, it is more difficult to ensure that the end edges are in alignment since they are not co-extensive with any edges of the frame of proofmass assembly 10.

In view of the foregoing, it is an object of the present invention to provide pendulous assembly of the general type described above, and specifically an assembly which is designed to ensure alignment between cooperating top and bottom mounting pads.

A more particular object of the present invention is to provide a pendulous assembly which is designed to ensure that at least the end edges of each pair of mounting pads are in vertical alignment with one another.

Another specific object of the present invention is to provide a proofmass assembly which is designed so as to ensure that both the end edges and the side edges of each pair of mounting pads are in vertical alignment with one another.

The present invention provides a pendulous assembly for use in an accelerometer or other such force sensing device, having a flat proofmass (32), means including a flat frame (34) supporting said proofmass for back and forth pivotal movement about an axis (38) through a resting plane, and a pair of mounting pads (40A, 40B) on opposite sides of the frame for mounting the frame to a support, with each of the mounting pads having an edge (56A, 56B) extending in a direction parallel to the axis, characterized by a slit (60) extending through the frame adjacent to the edges (56A, 56B) of the pads, with a side wall of the slit forming a continuous flat surface (62) with the edges (56A, 56B) and thereby ensuring accurate alignment of the pads along said edges.

The present invention also provides a pendulous assembly for use in an accelerometer or other such force sensing device, having a flat proofmass (32), means including a flat frame (66) supporting said proofmass for back and forth pivotal movement about an axis (38) through a resting plane, and a mounting pad (68) for mounting the frame to a support, characterized in that the mounting pad (68) is offset laterally of the frame (66) and has accurately aligned coplanar edge portions parallel to the axis (38) on opposite sides of the frame (66).

As will be seen hereinafter, the pendulous assembly disclosed herein includes at least one pair of vertically aligned top and bottom, generally rectangular mounting pads connected with the top side and bottom side of its frame, respectively, for mounting the frame and its associated proofmass to a main support forming part of the force sensing device. The top and bottom mounting pads have vertically aligned side and end pad to pad edges. In one embodiment disclosed herein the pads may not be the full width of the frame and a through-slit is provided in the frame adjacent each end edge so as to define single vertically continuous edges to ensure that the end edges of the mounting pads are, indeed, vertically aligned. In a second embodiment, the entire mounting pad including its end edges is connected to the frame in an outboard manner so that the end edges are exposed without the necessity for slits. In a third embodiment, a longitudinal through-slit is provided in the frame adjacent the inboard side edges of the mounting pads, whereby to ensure that most of the length of those edges are vertically aligned. Other embodiments will also be disclosed.

The overall pendulous assembly and the various mounting pad embodiments will be described in more detail hereinafter in conjunction with the drawings, wherein:

FIGURE 1 is a plan view of part of a pendulous assembly designed in accordance with the prior art;

FIGURE 2 is a side sectional view of the assembly of Figure 1, taken generally alone line 2-2 in Figure 1;

FIGURE 3 diagrammatically illustrates a possible structural drawback to the prior art pendulous assembly of the type illustrated in Figure 1 and 2;

FIGURE 4 is a plan view of a pendulous assembly designed in accordance with the present invention;

FIGURE 5 is a sectional view of a portion of the assembly of Figure 4, taken generally along line 5-5 in Figure 4, specifically illustrating a particular mounting pad arrangement designed in accordance with the present invention; and

FIGURES 6-8 respectively illustrate mounting pad arrangements designed in accordance with three different embodiments of the present invention.

Turning now to the drawings, wherein like components are designated by like reference numerals, attention is immediately directed to Figures 4 and 5 since Figures 1-3 have been discussed previously. Figure 4 illustrates a pendulous assembly 30 corresponding in function to assembly 10 and those described in Applicant's co-pending applications recited above. To that end, the pendulous assembly shown in Figure 4 includes a flat proofmass 32 and a support arrangement including a flat frame 34 and a flat flexure network generally indicated at 36 supporting the proofmass for back and forth pivotal movement about a given axis 38 through a horizontal resting plane (in the plane of the paper), which contains the proofmass, frame and flexure network when the proofmass is at rest. Like proofmass assembly 10, assembly 30 may include other components which are not pertinent to the present invention. The particular flexure network 36 is one which has certain novel features described in one of Applicant's parent applications. It is to be understood, however, that the present invention is not limited to any particular flexure network, as will be apparent hereinafter.

The proofmass assembly 30 also includes two pairs of vertically aligned mounting pads 40 and 42. Like mounting pads 18 and 20 forming part of previously described assembly 10, the mounting pads 40 are located on the top and bottom of one side section 34A of frame 34 and mounting pads 42 are located on the top and bottom of an opposite frame section 34B. Both frame sections 34A and 34B extend normal to axis 38, as seen in Figure 4. As also seen in this figure, the frame sections 34A and 34B are disposed on opposite sides of proofmass 32. The frame section 34A includes a longitudinally extending outboard side edge 44 and a longitudinally extending inboard edge 46, the latter being closer to proofmass 32. In a similar manner, frame section 34B includes a longitudinally extending outboard edge 48 and a longitudinally extending inboard edge 50.

Referring to Figure 5, the mounting pads 40 are shown in section. The upper pad is indicated at 40A and the lower pad is indicated at 40B. Returning to Figure 4, it can be seen that the outboard and inboard side edges 52 and 54, respectively, of upper and lower mounting pads 40A and 40B are co-extensive with the outboard and inboard edges 44 and 46 of frame section 34. As a result, all of these edges are exposed therefore, and, it can be readily visually seen whether they are in vertical alignment with one another and thereby define vertically aligned common pad to pad edges. In fact, the specific way in which the proofmass assembly is to be made, a preferred embodiment, ensures that all of these side edges are in vertical alignment with one another. More specifically, in this preferred embodiment, the proofmass 32, frame 34, flexure network 36 and the mounting pads 40 and 42 are integrally formed as a single unit from a quartz wafer. The proofmass 32, flexure network 36 and frame 34, except for sections corresponding to the mounting pads, are chemically etched thinner than the mounting pads so that the latter are raised relative to the other components. As illustrated in Figure 5, the vertical edges 52 and 54 are not exposed to etching since they are actually cut initially and, thus are well defined, whereas the liner where the etching process takes place leaves an edge which is not well defined.

From the procedure just described, it should be apparent that the side edges 52 and 54 of pad 40 are automatically aligned with one another since they are cut that way. This is also true for mounting pads 42. However, it is not true for the end edges of either pair of mounting pads. The end edges of mounting pad 40A are shown at 56A and 58A in Figure 5, and the end edges of mounting pad 40B are shown at 56B and 58B in the same figure. The etching process described above does not ensure that end edge 56A vertically aligns up with end edge 56B or that end edge 58A vertically aligns up with end edge 56B because of the frame section therebetween. Therefore, in accordance with the present invention, through slits 60 are provided (cut) in frame section 34A adjacent the end edges of pads 40. In one case of, for example, edges 56A and 56B, the presence of through-slit 60 results in each of the end edges defining a single vertically continuous, exposed pad to pad edge 62 along substantially the entire extent of the slit. In the case of end edges 58A and 58B, slit 60 results in a similar vertically continuously exposed edge 64. These vertically continuous edges ensure that the end edges are vertically aligned with one another in the intended manner. This is also true for mounting pad 42. In actual practice, the slits 60 are provided in the quartz wafer after the latter is etched. In that way, the end edges of the mounting pads automatically line up with one another in the same manner as the lateral or side edges of the mounting pads. It may also be desirable to provide similar side slits so that it is not necessary to rely on the alignment of inboard and outboard side edges 52 and 54. Corresponding side slits 63 are shown along and through pad 42 by means of dotted lines. In this case, the side edges of pads 42 are spaced inward of the side edges of frame section 34B, as also indicated by dotted line. Similar side slits could be provided in pads 40.

Figure 6 illustrates a frame section 66 corresponding in function to, for example, frame section 34 of assembly 30. However, in this embodiment, rather than having mounting pads on top and bottom of the frame section, the vertically aligned upper and lower mounting pads 68 are provided outboard of the outboard longitudinal edge 70 of frame section 66. As illustrated in Figure 6, the end edges and the outboard side edge of mounting pad 66 are laterally offset or outward of frame section 66. In that way, the end edges and the outboard edges of mounting pad 66 define vertically continuous exposed edges. In a preferred embodiment, the mounting pads 68, like previously described mounting pads 40 and 42, are formed integrally with the frame section 66 and the latter is etched thinner than the pads.

Figure 7 illustrates an embodiment identical to the one shown in Figure 6 but includes a longitudinally extending through-slit extensive with the inboard side edges of outboard mounting pads 68. This provides the same advantage as previously recited slit 60, that is, slit 72 results in a single vertically continuous exposed edge along the inboard side edges of aligned mounting pads 68.

The mounting pad arrangement shown in Figure 8 results from separating frame section 66 into two separate and distinct segments 70′ and 70″ which are respectively connected to opposite inboard ends of a pair of vertically aligned outboard mounting pads 74. As in the previous embodiments, mounting pad 74 can be integrally formed with frame segments 70′ and 70″ except that the latter are etched thinner than the mounting pads.

In all of the embodiments described in Figures 6-8, similar mounting pads will most likely be provided on opposite sides of the frame, as in the case of assembly 30. Moreover, it is to be understood that while these mounting pad embodiments preferably form an integral unit with the frame and from a quartz wafer, the present invention is not limited to this particular approach. For example, it may be that the mounting pads are separate from the frame. In this case, the slits in the frame (where used) would serve to align cooperating pads. Alignment pins through the slits may be necessary to achieve proper alignment between cooperating pads. Moreover, it is to be understood that the mounting pads of the present invention are not limited to pendulous type accelerometers but may be incorporated into translational devices or other types of transducers.

**Claims**

1. A pendulous assembly for use in an accelerometer or other such force sensing device, having a flat proofmass (32), means including a flat frame (34) supporting said proofmass for back and forth pivotal movement about an axis (38) through a resting plane, and a pair of mounting pads (40A, 40B) on opposite sides of the frame for mounting the frame to a support, with each of the mounting pads having an edge (56A, 56B) extending in a direction parallel to the axis, characterised by a slit (60) extending through the frame adjacent to the edges (56A, 56B) of the pads, with a side wall of the slit forming a continuous flat surface (62) with the edges (56A, 56B) and thereby ensuring accurate alignment of the pads along said edges.

2. A pendulous assembly as defined by Claim 1, further characterized by a second slit (60) extending through the frame (34) adjacent to second edges (58A, 58B) of the pads (40A, 40B), with a side wall of the second slit forming a continuous flat surface (64) with the second edges (58A, 58B) and thereby ensuring accurate alignment of the pads along the second edges.

3. A pendulous assembly as defined by Claim 2 further characterized in that the second edges (58A, 58B) are parallel to the first named edges (56A, 56B).

4. A pendulous assembly as defined by Claim 2 further characterized in that the second edges are perpendicular to the first named edges (56A, 56B).

5. A pendulous assembly as defined by any of the preceding claims, further characterized in that the frame 34 includes a pair of frame sections (43A, 34B) which extend in a direction normal to the axis (38) on opposite sides of the proofmass (32), and mounting pads (40, 42) with edges aligned through slits (60) are provided for each of the frame sections.

6. A pendulous assembly as defined in any one of the preceding claims, further characterized in that side edges (52, 54) of the pads (40A, 40B) are co-extensive with a side edge (44, 46) of the frame (34).

7. A pendulous assembly as defined by any of the preceding claims, further characterized in that the proofmass (32), frame (34), and mounting pads (40, 42) are integrally formed from a single sheet of material.

8. A pendulous assembly for use in an accelerometer or other such force sensing device, having a flat proofmass (32), means including a flat frame (66) supporting said proofmass for back and forth pivotal movement about an axis (38) through a resting plane, and a mounting pad (68) for mounting the frame to a support, characterized in that the mounting pad (68) is offset laterally of the frame (66) and has accurately aligned coplanar edge portions parallel to the axis (38) on opposite sides of the frame (66).

9. A pendulous assembly as defined by Claim 8 further characterized in that the pad (68) has inboard side edge portions aligned with an outboard side edge (70) of the frame.

10. A pendulous assembly as defined by Claim 9 further characterized by a slit (72) extending through a frame adjacent to the side edge portions of the pad, with a side wall of the slit forming a continuous flat surface with the side edge portions.

11. A pendulous assembly as defined by Claim 9, further characterized in that the frame is formed in two spaced apart sections (70′, 70″), and the mounting pad (74) is connected to the two frame sections toward opposite ends of the pad, with the pad (74) having accurately aligned coplanar edge portions along the inboard and outboard sides thereof and on opposite sides of the frame.

12. A pendulous assembly as defined by Claim 9, further characterized in that the mounting pad (74) has inboard and outboard side edges located outboard of an outboard edge of the frame (70′, 70″).

13. A pendulous assembly as defined by any of Claims 9 to 12, further characterized in that the proofmass (32), frame (66, 70′, 70″), and mounting pads (40, 42) are integrally formed form a single sheet of material.

**Patentansprüche**

1. Pendelartige Anordnung zur Verwendung in einem Beschleunigungsmeßgerät oder einer anderen, eine derartige Kraft erfassenden Einrichtung, mit einer flachen Prüfmasse (32), Mitteln, die einen flachen Rahmen (34) aufweisen, in welchem die Prüfmasse für eine vor- und zurückgehende Schwenkbewegung um eine Achse (38) durch eine Ruheebene, gelagert ist, und einem Paar Montagekonsolen (40A, 40B) an den einander gegenüberliegenden Seiten des Rahmens zum Montieren des Rahmens an einem Ständer, wobei jede der Montagekonsolen eine Kante (56A, 56B) aufweist, die sich in einer Richtung parallel zur Achse erstreckt, **gekennzeichnet** durch einen Schlitz (60), der sich durch den Rahmen in der Nähe der Kanten (56A, 56B) der Konsolen erstreckt, wobei eine Seitenwand des Schlitzes mit den Kanten (56A, 56B) eine durchgehende ebene Fläche (32) bildet und dabei eine genaue Ausrichtung der Konsolen entlang der Kanten sicherstellt.

2. Pendelartige Anordnung nach Anspruch 1, weiter **gekennzeichnet** durch einen zweiten Schlitz (60), der sich durch den Rahmen (34) in der Nähe von zweiten Kanten (58A, 58B) der Konsolen (40A, 40B) erstreckt, wobei eine Seitenwand des zweiten Schlitzes mit den zweiten Kanten (58A, 58B) eine durchgehende ebene Fläche (64) bildet und dabei eine genaue Ausrichtung der Konsolen entlang der zweiten Kanten sicherstellt.

3. Pendelartige Anordnung nach Anspruch 2, weiterhin dadurch **gekennzeichnet**, daß die zweiten Kanten (58A, 58B) parallel zu den zuerst genannten Kanten (56A, 56B) liegen.

4. Pendelartige Anordnung nach Anspruch 2, weiterhin dadurch **gekennzeichnet**, daß die zweiten Kanten rechtwinkelig zu den zuerst genannten Kanten (56A, 56B) liegen.

5. Pendelartige Anordnung nach irgendeinem der vorstehenden Ansprüche, weiterhin dadurch **gekennzeichnet,** daß der Rahmen (34) ein Paar Rahmenabschnitte (43A, 34B) aufweist, die sich in einer Richtung senkrecht zur Achse (38) an den einander gegenüberliegenden Seiten der Prüfmasse (32) erstrecken und für jeden der Rahmenabschnitte Montagekonsolen (40, 42) mit mit den Schlitzen (60) fluchtenden Kanten vorgesehen sind.

6. Pendelartige Anordnung nach irgendeinem der vorstehenden Ansprüche, weiterhin dadurch **gekennzeichnet,** daß Seitenkanten (52, 54) der Konsolen (40A, 40B) sich mit einer Seitenkante (44, 46) des Rahmens (34) in gleicher Ausdehnung erstrecken.

7. Pendelartige Anordnung nach irgendeinem der vorstehenden Ansprüche, weiterhin dadurch **gekennzeichnet,** daß die Prüfmasse (32), der Rahmen (34) und die Montagekonsolen (40, 42) einstückig aus einem einzigen Blatt Material geformt sind.

8. Pendelartige Anordnung zur Verwendung in einem Beschleunigungsmeßgerät oder einer anderen, eine derartige Kraft erfassenden Einrichtung, mit einer flachen Prüfmasse (32), Mitteln, die einen flachen Rahmen (66) aufweisen, welcher die Prüfmasse für eine vor- und zurückgehende Schwenkbewegung um eine Achse (38) durch eine Ruheebene trägt, und eine Montagekonsole (68) zum Montieren des Rahmens an einem Ständer, dadurch **gekennzeichnet**, daß die Montagekonsole (68) zum Rahmen (66) seitlich versetzt ist, und in einer Ebene genau fluchtende Kantenteile parallel zur Achse (38) an den einander gegenüberliegenden Seiten des Rahmens (66) hat.

9. Pendelartige Anordnung nach Anspruch 8, weiterhin dadurch **gekennzeichnet,** daß die Konsole (68) nach innen weisende Seitenkantenteile hat, die mit einer nach außen weisenden Seitenkante (70) des Rahmens fluchten.

10. Pendelartige Anordnung nach Anspruch 9, weiterhin **gekennzeichnet** durch einen Schlitz (72), der sich durch einen Rahmen in der Nähe der Seitenkantenteile der Konsole erstreckt, wobei eine Seitenwand des Schlitzes mit den Seitenkantenteilen eine durchgehende ebene Fläche bildet.

11. Pendelartige Anordnung nach Anspruch 9, weiterhin dadurch **gekennzeichnet**, daß der Rahmen in zwei im Abstand zueinanderliegenden Abschnitten (70', 70'') gebildet ist, und die Montagekonsole (74) mit den zwei Rahmenabschnitten in Richtung auf die einander gegenüberliegenden Enden der Konsole zu verbunden ist, wobei die Konsole (74) genau fluchtende, in einer Ebene liegende Kantenteile entlang ihrer nach innen weisenden und nach außen weisenden Seiten und an den einander gegenüberliegenden Seiten des Rahmens hat.

12. Pendelartige Anordnung nach Anspruch 9, weiterhin dadurch **gekennzeichnet**, daß die Montagekonsole (74) nach innen und nach außen weisende Seitenkanten hat, die außerhalb einer nach außen weisenden Kante des Rahmens (70', 70'') liegen.

13. Pendelartige Anordnung nach irgendeinem der Ansprüche 9 bis 12, weiterhin dadurch **gekennzeichnet,** daß die Prüfmasse (32), der Rahmen (66, 70', 70''), die Montagekonsole (40, 42) einstückig aus einem einzigen Blatt Material hergestellt sind.

**Revendications**

1. Ensemble pendulaire pour utilisation dans un accéléromètre ou autre dispositif de détection de force de ce genre comportant une masse étalon plate (32), un moyen comprenant un cadre plat (34) supportant ladite masse étalon pour un mouvement pivotant d'avant en arrière autour d'un axe (38) en passant par un plan de repos, et une paire de plots de montage (40A, 40B) des côtés opposés du cadre pour monter le cadre sur un support, chacun des plots de montage ayant un bord (56A, 56B) s'étendant dans une direction parallèle à l'axe, caractérisé par une fente (60) s'étendant à travers le cadre, adjacente aux bords (56A, 56B) des plots, une paroi latérale de la fente formant une surface plane continue (62) avec les bords (56A, 56B) et garantissant par ce moyen un alignement précis des plots le long desdits bords.

2. Ensemble pendulaire selon la revendication 1, caractérisé de plus par une seconde fente (60) s'étendant à travers le cadre (34), adjacente aux seconds bords (58A, 58B) des plots (40A, 40B), une paroi latérale de la seconde fente formant une surface plane continue (64) avec les seconds bords (58A, 58B) et garantissant par ce moyen un alignement précis des plots le long des seconds bords.

3. Ensemble pendulaire selon la revendication 2, caractérisé de plus en ce que les seconds bords (58A, 58B) sont parallèles auxdits premiers bords (56A, 56B).

4. Ensemble pendulaire selon la revendication 2, caractérisé de plus en ce que les seconds bords sont perpendiculaires auxdits premiers bords (56A, 56B).

5. Ensemble pendulaire selon l'une quelconque des revendications précédentes, caractérisé de plus en ce que le cadre (34) comprend deux sections de cadre (43A, 34B) qui s'étendent dans une direction perpendiculaire à l'axe (38) sur les côtés opposés de la masse étalon (32), et en ce que des plots de montage (40, 42) avec des bords alignés à travers les fentes (60) sont prévus pour chacune des sections de cadre.

6. Ensemble pendulaire selon l'une quelconque des revendications précédentes, caractérisé de plus en ce que les bords latéraux (52, 54) des plots (40A, 40B) s'étendent dans le même plan que l'un des bords latéraux (44, 46) du cadre (34).

7. Ensemble pendulaire selon l'une quelconque des revendications précédentes, caractérisé de plus en ce que la masse étalon (32), le cadre (34), et les plots de montage (40, 42) sont formés d'un seul tenant à partir d'une feuille de matière unique.

8. Ensemble pendulaire pour utilisation dans un accéléromètre ou autre dispositif de détection de force de ce genre comportant une masse étalon plate (32), un moyen comprenant un cadre plat (66) supportant ladite masse étalon pour un mouvement pivotant d'avant en arrière autour d'un axe (38) en passant par un plan de repos, et un plot de montage (68) pour monter le cadre sur un support, caractérisé en ce que le plot de montage (68) est décalé latéralement par rapport au cadre (66) et a des parties bords coplanaires alignées de manière précise parallèles à l'axe (38) sur les côtés opposés du cadre (66).

9. Ensemble pendulaire selon la revendication 8, caractérisé de plus en ce que le plot (68) a des parties bords latéraux intérieures alignées avec un bord latéral extérieur (70) du cadre.

10. Ensemble pendulaire selon la revendication 9, caractérisé par une fente (72) s'étendant à travers un cadre, adjacente aux parties bords latéraux du plot, une paroi latérale de la fente formant une surface plane continue avec les parties bords latéraux.

11. Ensemble pendulaire selon la revendication 9, caractérisé de plus en ce que le cadre est formé de deux sections espacées (70', 70''), et en ce que le plot de montage (74) est relié aux deux sections de cadre vers les extrémités opposées du plot, le plot (74) ayant des parties bords coplanaires alignées de manière précise le long de ses côtés intérieur et extérieur et situées sur les côtés opposés du cadre.

12. Ensemble pendulaire selon la revendication 9, caractérisé de plus en ce que le plot de montage (74) possède des bords latéraux intérieur et extérieur situés à l'extérieur d'un bord extérieur du cadre (70', 70'').

13. Ensemble pendulaire selon l'une quelconque des revendications 9 à 12, caractérisé de plus en ce que la masse étalon (32), le cadre (66, 70', 70''), et les plots de montage (40, 42) sont formés d'un seul tenant à partir d'une feuille de matière unique.

(PRIOR ART)

FIG.—1

(PRIOR ART)

FIG.—2

FIG.—3

8

FIG.—4

FIG.—5

FIG.—6  FIG.—7  FIG.—8